(19) Europäisches Patentamt
European Patent Office
Office européen des brevets

(11) **EP 4 318 271 A1**

(12) **EUROPEAN PATENT APPLICATION**
published in accordance with Art. 153(4) EPC

(43) Date of publication:
**07.02.2024 Bulletin 2024/06**

(21) Application number: **21936943.6**

(22) Date of filing: **14.04.2021**

(51) International Patent Classification (IPC):
*G06F 16/90* (2019.01)

(52) Cooperative Patent Classification (CPC):
**G06F 16/90**

(86) International application number:
**PCT/JP2021/015420**

(87) International publication number:
**WO 2022/219741 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **ITSUI Hiroyasu
Tokyo 100-8310 (JP)**

(74) Representative: **Pfenning, Meinig & Partner mbB
Patent- und Rechtsanwälte
Theresienhöhe 11a
80339 München (DE)**

(54) **LEARNING DEVICE, INFERENCE DEVICE, PROGRAM, LEARNING METHOD, AND INFERENCE METHOD**

(57) An information processing device (100) includes a morphological-analysis performing unit (102) that performs morphological analysis on character strings to identify the word classes of words included in the character strings; a specifying unit (103) that specifies a permutation of target terms, which are words selected from the character strings, on the basis of the identified word classes; and a generating unit (105) that calculates permutation pointwise mutual information, which is pointwise mutual information of the permutation in a corpus, and learns the permutation and the permutation pointwise mutual information, to generate a permutation pointwise-mutual-information model, which is a trained model.

*FIG. 1*

EP 4 318 271 A1

## Description

### TECHNICAL FIELD

The disclosure relates to a learning device, an inference device, a program, a learning method, and an inference method.

### BACKGROUND ART

Conventionally, there is a method that uses deep learning to calculate the likelihood of inference for common sense inference processing of a natural language (for example, refer to Patent Literature 1).

### PRIOR ART REFERENCE

### PATENT REFERENCE

Patent Literature 1: US Patent No. 10452978

### SUMMARY OF THE INVENTION

### PROBLEM TO BE SOLVED BY THE INVENTION

However, in the conventional technique, the computational effort is enormous because the meaning of words is converted to context-dependent distributed representations, which are then subjected to dimensional compression.
Accordingly, an object of one or more aspects of the disclosure is to allow model learning and inference to be performed with a small computational effort.

### MEANS OF SOLVING THE PROBLEM

A learning device according to a first aspect of the disclosure includes: a morphological-analysis performing unit configured to perform morphological analysis on a plurality of character strings to identify word classes of a plurality of words included in the character strings; a specifying unit configured to specify a permutation of a plurality of target terms on a basis of the identified word class, the target terms being words selected from the character strings; and a generating unit configured to calculate pointwise mutual information of the permutation in a corpus and learn the permutation and the pointwise mutual information of the permutation to generate a permutation pointwise-mutual-information model, the pointwise mutual information of the permutation being permutation pointwise mutual information, the permutation pointwise-mutual-information model being a trained model.
A learning device according to second aspect of the disclosure includes: a morphological-analysis performing unit configured to perform morphological analysis on first character strings to identify word classes of a plurality of words included in the first character strings, and to perform morphological analysis on a plurality of second character strings constituting an answer text to the question text to identify word classes of a plurality of words included in the second character strings, the first character strings including a character string constituting a question text and a plurality of character strings constituting an answer text to the question text; a specifying unit configured to specify a combination of first target terms on a basis of the word classes identified for the first character strings, and to specify a permutation of second target terms on a basis of the word classes identified for the second character strings, the first target terms being words selected from the first character strings, the second target terms being words selected from second character strings; and a generating unit configured to generate a combination pointwise-mutual-information model by calculating pointwise mutual information of the combination in a corpus and learning the combination and the pointwise mutual information of the combination, and to generate a permutation pointwise-mutual-information model by calculating pointwise mutual information of the permutation in a corpus and learning the permutation and the pointwise mutual information of the permutation, the pointwise mutual information of the combination being combination pointwise mutual information, the combination pointwise-mutual-information model being a trained model, the pointwise mutual information of the permutation being permutation pointwise mutual information, the permutation pointwise-mutual-information model being a trained model.
An inference device according to a first aspect of the disclosure is configured to make an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the inference device including: an acquiring unit configured to acquire a step count of two or more for an answer to a question text; a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts; a morphological-analysis performing unit configured to perform morphological analysis on each of the procedural texts to identify word classes of a plurality of words included in each of the procedural texts; and an inference unit configured to specify a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

An inference device according to a second aspect of the disclosure is configured to make an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the inference device including: an acquiring unit configured to acquire a question text and a step count of two or more for an answer to the question text; a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts and to generate a plurality of question-answering procedural texts by concatenating the question text in front of each of the procedural texts; a morphological-analysis performing unit configured to perform morphological analysis on each of the question-answering procedural texts to identify word classes of a plurality of words included in each of the question-answering procedural texts; and an inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of target procedural texts by deleting the question text from a plurality of question-answering procedural texts extracted by narrowing down the procedural texts with the first likelihood, and specify a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

An inference device according to a third aspect of the disclosure is configured to make an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the inference device including: an acquiring unit configured to acquire a question text and a step count of two or more for an answer to the question text; a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts and to generate a plurality of question-answering procedural texts by concatenating the question text in front of each of the procedural texts; a morphological-analysis performing unit configured to perform morphological analysis on each of the question-answering procedural texts to identify word classes of a plurality of words included in each of the question-answering procedural texts; a first inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of first target procedural texts by deleting the question text from a plurality of question-answering procedural texts extracted by narrowing down the procedural texts with the first likelihoods, specify a permutation of a plurality of second target terms selected from each of the first target procedural texts on a basis of the identified word classes, refer to the permutation pointwise-mutual-information model, and specify a likelihood of the specified permutation, to specify a second likelihood of each of the first target procedural texts, and narrow down the first target procedural texts with the second likelihoods to extract a plurality of second target procedural texts; and a second inference unit configured to refer to the target trained model to specify a ranking likelihood, the ranking likelihood being a likelihood of each of the second target procedural texts.

A program according to a first aspect of the disclosure causes a computer to function as: a morphological-analysis performing unit configured to perform morphological analysis on a plurality of character strings to identify word classes of a plurality of words included in the character strings; a specifying unit configured to specify a permutation of a plurality of target terms on a basis of the identified word classes, the target terms being words selected from the character strings; and a generating unit configured to calculate pointwise mutual information of the permutation in a corpus and learn the permutation and the pointwise mutual information of the permutation to generate a permutation pointwise-mutual-information model, the pointwise mutual information of the permutation being permutation pointwise mutual information, the permutation pointwise-mutual-information model being a trained model.

A program according to a second aspect of the disclosure causes a computer to function as: a morphological-analysis performing unit configured to perform morphological analysis on first character strings to identify word classes of a plurality of words included in the first character strings, and to perform morphological analysis on a plurality of second character strings constituting an answer text to the question text to identify word classes of a plurality of words included in the second character strings, the first character strings including a character string constituting a question text and a plurality of character strings constituting an answer text to the question text; a specifying unit configured to specify a combination of first target terms on a basis of the word classes identified for the first character strings, and to specify a permutation of second target terms on a basis of the word classes identified for the second character strings, the first target terms being words selected from the first character strings, the second target terms being words selected from second character strings; and a generating unit configured to generate a combination pointwise-mutual-information model by calculating pointwise mutual information of the combination in a corpus and learning the combination and the pointwise mutual information of the combination, and to generate a permutation pointwise-mutual-information model by calculating pointwise mutual information of the permutation in a corpus and learning the permutation and the pointwise mutual information of the permutation, the pointwise mutual information of the combination being combination pointwise mutual information, the combination pointwise-mutual-information model being a trained model, the pointwise mutual information of the permutation being permutation pointwise mutual information, the permutation pointwise-mutual-information model being a trained model.

A program according to a third aspect of the disclosure causes a computer to function as an inference device configured to make an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the program further causing the computer to function as: an acquiring unit configured to acquire a step count of two or more for an answer to a question text; a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts; a morphological-analysis performing unit configured to perform morphological analysis on each of the procedural texts to identify word classes of a plurality of words included in each of the procedural texts; and an inference unit configured to specify a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

A program according to a fourth aspect of the disclosure causes a computer to function as an inference device configured to make an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the program further causing the computer to function as: an acquiring unit configured to acquire a question text and a step count of two or more for an answer to the question text; a procedural-text generating unit configured to extract a same number of candidate texts as the step count from the candidate texts to be candidates of an answer to the question text and concatenate the two or more extracted candidate texts, to generate a plurality of procedural texts each including the two or more candidate texts and to generate a plurality of question-answering procedural texts by concatenating the question text in front of each of the procedural texts; a morphological-analysis performing unit configured to perform morphological analysis on each of the question-answering procedural texts to identify word classes of a plurality of words included in each of the question-answering procedural texts; and an inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of target procedural texts by deleting the question text from a plurality of question-answering procedural texts extracted by narrowing down the procedural texts with the first likelihood, and specify a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

A program according to a fifth aspect of the disclosure causes a computer to function as an inference device configured to make an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the program further causing the computer to function as: an acquiring unit configured to acquire a question text and a step count of two or more for an answer to the question text; a procedural-text generating unit configured to extract a same number of candidate texts as the step count from the candidate texts to be candidates of an answer to the question text and concatenate the two or more extracted candidate texts, to generate a plurality of procedural texts each including the two or more candidate texts and to generate a plurality of question-answering procedural texts by concatenating the question text in front of each of the procedural texts; a morphological-analysis performing unit configured to perform morphological analysis on each of the question-answering procedural texts to identify word classes of a plurality of words included in each of the question-answering procedural texts; a first inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of first target procedural texts by deleting the question text from a plurality of question-answering procedural texts extracted by narrowing down the procedural texts with the first likelihoods, specify a permutation of a plurality of second target terms selected from each of the first target procedural texts on a basis of the identified word classes, refer to the permutation pointwise-mutual-information model, and specify a likelihood of the specified permutation, to specify a second likelihood of each of the first target procedural texts, and narrow down the first target procedural texts with the second likelihoods to extract a plurality of second target procedural texts; and a second inference unit configured to refer to the target trained model to specify a ranking likelihood, the ranking likelihood being a likelihood of each of the second target procedural texts.

A learning method according to a first aspect of the disclosure includes: performing morphological analysis on a plurality of character strings to identify word classes of a plurality of words included in the character strings; specifying a permutation of a plurality of target terms on a basis of the identified word classes, the target terms being a plurality of words selected from the character strings; calculating permutation pointwise mutual information, the permutation pointwise mutual information being pointwise mutual information of the permutation in a corpus; and generating a permutation pointwise-mutual-information model by learning the permutation and the permutation pointwise mutual information, the permutation pointwise-mutual-information model being a trained model.

A learning method according to a second aspect of the disclosure includes: performing morphological analysis on a plurality of first character strings to identify word classes of a plurality of words included in the first character strings, the first character strings including a character string constituting a question text and a plurality of character strings constituting an answer text to the question text; performing morphological analysis on a plurality of second character strings to identify word classes of a plurality of words included in the second character strings, the second character strings being a plurality of character strings constituting an answer text to the question text; specifying a combination of a plurality of first target terms on a basis of the word classes identified in the first character strings, the first target terms being a plurality of words selected from the first character strings; specifying a permutation of a plurality of second target terms on a basis of the word classes identified in the second character strings, the second target terms being a plurality of words selected from the second character strings; calculating combination pointwise mutual information, the combination pointwise mutual information being pointwise mutual information of the combination in a corpus; generating a combination pointwise-mutual-information model by learning the combination and the combination pointwise mutual information, the combination pointwise-mutual-information model being a trained model; calculating permutation pointwise mutual information, the permutation pointwise mutual information being pointwise mutual information of the permutation in a corpus; and generating a permutation pointwise-mutual-information model by learning the permutation and the permutation pointwise mutual information, the permutation pointwise-mutual-information model being a trained model.

An inference method according to a first aspect of the disclosure is a method of making an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the method including: acquiring a step count of two or more for an answer to a question text; extracting a same number of candidate texts as the step count from the candidate texts to be candidates of the answer to the question text and concatenating the two or more extracted candidate texts, to generate a plurality of procedural texts each including the two or more candidate texts; performing morphological analysis on each of the procedural texts to identify word classes of a plurality of words included in each of the procedural texts; and specifying a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

An inference method according to a second aspect of the disclosure is a method of making an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the method including: acquiring a question text and a step count of two or more for an answer to the question text; extracting a same number of candidate texts as the step count from the candidate texts to be candidates of the answer to the question text and concatenating the two or more extracted candidate texts, to generate a plurality of procedural texts each including the two or more candidate texts; generating a plurality of question-answering procedural texts by concatenating the question text in front of each of the procedural texts; performing morphological analysis on each of the question-answering procedural texts to identify word classes of a plurality of words included in each of the question-answering procedural texts; specifying a combination of a plurality of first target terms selected from each of the question-answering procedural texts on a basis of the identified word classes, referring to the combination pointwise-mutual-information model, and specifying a likelihood of the specified combination, to specify a first likelihood, the first likelihood being a likelihood of each of the procedural texts; generating a plurality of target procedural texts by narrowing down the procedural texts with the first likelihoods to delete the question text from the extracted question-answering procedural texts; and specifying a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

An inference method according to a third aspect of the disclosure is a method of making an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the method including: acquiring a question text and a step count of two or more for an answer to the question text; extracting a same number of candidate texts as the step count from the candidate texts to be candidates of the answer to the question text and concatenating the two or more extracted candidate texts, to generate a plurality of procedural texts each including the two or more candidate texts; generating a plurality of question-answering procedural texts by concatenating the question text in front of each of the procedural texts; performing morphological analysis on each of the question-answering procedural texts to identify word classes of a plurality of words included in each of the question-answering procedural texts; specifying a combination of a plurality of first target terms selected from each of the question-answering procedural texts on a basis of the identified word classes, referring to the combination pointwise-mutual-information model, and specifying a likelihood of the specified combination, to specify a first likelihood, the first likelihood being a likelihood of each of the procedural texts; generate a plurality of first target procedural texts by deleting the question text from a plurality of question-answering procedural texts extracted by narrowing down the procedural texts with the first likelihoods; specifying a permutation of a plurality of second target terms selected from each of the first target procedural texts on a basis of the identified word classes, referring to the permutation pointwise-mutual-information model, and specifying a likelihood of the specified permutation, to specify a second likelihood, the second likelihood being a likelihood of each of the first target procedural texts; extracting a plurality of second target procedural texts by narrowing down the first target procedural texts with the second likelihoods; and referring to the target trained model to specify a ranking likelihood, the ranking likelihood being a likelihood of each of the second target procedural texts.

## EFFECTS OF THE INVENTION

According to one or more aspects of the disclosure, model learning and inference can be performed with a small computational effort.

## BRIEF DESCRIPTION OF THE DRAWINGS

FIG. 1 is a block diagram schematically illustrating a configuration of an information processing device according to a first embodiment.
FIG. 2 is a block diagram schematically illustrating a configuration of a computer as an implementation example of the information processing device.
FIG. 3 is a flowchart illustrating an operation for training a permutation pointwise-mutual-information model by the information processing device according to the first embodiment.
FIG. 4 is a block diagram schematically illustrating a configuration of an information processing device according to a second embodiment.
FIG. 5 is a flowchart illustrating an operation for performing common sense inference by the information processing device according to the second embodiment.
FIG. 6 is a block diagram schematically illustrating a configuration of an information processing device according to a third embodiment.
FIG. 7 is a flowchart illustrating an operation for training a combination pointwise-mutual-information model by the information processing device according to the third embodiment.
FIG. 8 is a block diagram schematically illustrating a configuration of an information processing device according to a fourth embodiment.
FIG. 9 is a flowchart illustrating an operation for performing common sense inference by the information processing device according to the fourth embodiment.
FIG. 10 is a block diagram schematically illustrating a configuration of an information processing device according to a fifth embodiment.
FIG. 11 is a flowchart illustrating an operation for performing common sense inference by the information processing device according to the fifth embodiment.

## MODE FOR CARRYING OUT THE INVENTION

## FIRST EMBODIMENT

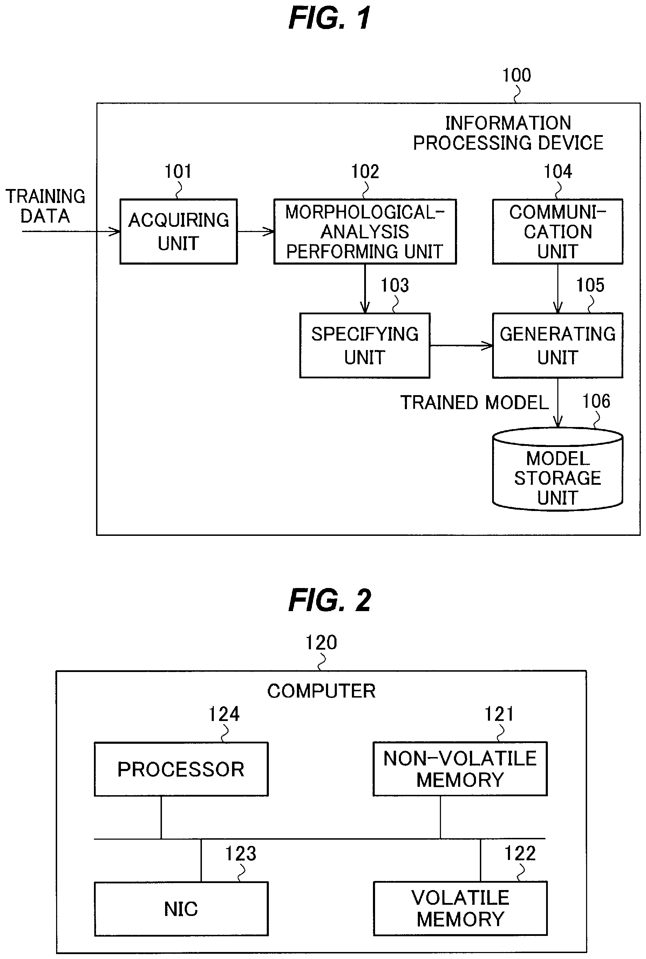

FIG. 1 is a block diagram schematically illustrating a configuration of an information processing device 100 functioning as a learning device according to the first embodiment.
The information processing device 100 includes an acquiring unit 101, a morphological-analysis performing unit 102, a specifying unit 103, a communication unit 104, a generating unit 105, and a model storage unit 106.
The acquiring unit 101 acquires training data. The training data is text data including character strings. For example, the acquiring unit 101 may acquire the training data from another device via the communication unit 104 or may acquire the training data from a user or the like via an input unit (not illustrated). The acquiring unit 101 then gives the training data to the morphological-analysis performing unit 102. Here, the character strings are answers to a question text.
The morphological-analysis performing unit 102 performs morphological analysis on the character strings represented by the training data to identify the word classes of the words in the character strings.
The morphological-analysis performing unit 102 then gives, to the specifying unit 103, word class data representing the words of identified word classes.
The specifying unit 103 specifies, on the basis of the identified word classes, the permutations of target terms or words selected from the words of identified word classes represented by the word class data. Here, the target terms are assumed to be one argument and two predicates but are not limited to such examples. The specifying unit 103 then gives permutation data representing the specified permutations to the generating unit 105.
Here, a predicate is a verb, an adjective, an adjective verb, or a noun that can form a verb by adding *"suru,"* and a predicate is a word that can be a subject or an object, which here is a noun.
The communication unit 104 communicates with other devices. Here, the communication unit 104 communicates with, for example, a server (not illustrated) on the Internet, to connect to a corpus stored on the server. A corpus is a structured, large-scale data collection of natural language texts.

The generating unit 105 connects to a corpus via the communication unit 104 and calculates the permutation pointwise mutual information, which is the permutation pointwise mutual information of the permutations of the one argument and two predicates represented by the permutation data in the corpus.

The permutation pointwise mutual information is calculated, for example, by the following equation (1):

$$PMI(w_k^1, v_i^2, v_j^3) = log_2 \frac{P(w_k^1, v_i^2, v_j^3)}{P(w_k)P(v_i)P(v_j)}$$

$$(1)$$

Here, $w_k^1$ denotes an argument that appears first in a permutation of one argument and two predicates represented by the permutation data; $v_i^2$ denotes a predicate that appears second in the permutation represented by the permutation data; $v_j^3$ denotes a predicate that appears third in the permutation represented by the permutation data.

$P(w_k)$ denotes the probability of appearance of the argument $w_k$ and is the number of appearances of the argument $w_k$ relative to the total number of words in the corpus. $P(v_i)$ denotes the probability of appearance of the predicate $v_i$ and is the number of appearances of the argument $v_i$ relative to the total number of words in the corpus. $P(v_j)$ denotes the probability of appearance of the predicate $v_j$ and is the number of appearances of the argument $v_j$ relative to the total number of words in the corpus. $P(w_k^1, v_i^2, v_j^3)$ denotes the probability of appearance of the argument $w_k$, the predicate $v_i$, and the predicate $v_j$ in this order in the corpus, and is the number of texts in which the argument $w_k^1$, the predicate $v_i^2$, and the predicate $v_j^3$ appear in this order relative to the total number of words in the corpus.

Here, when the argument $w_k$ appears second, the permutation pointwise mutual information is calculated, for example, by the following equation (2):

$$PMI(v_i^1, w_k^2, v_j^3) = log_2 \frac{P(v_i^1, w_k^2, v_j^3)}{P(w_k)P(v_i)P(v_j)}$$

$$(2)$$

When the argument $w_k$ appears third, the permutation pointwise mutual information is calculated, for example, by the following equation (3):

$$PMI(v_i^1, v_j^2, w_k^3) = log_2 \frac{P(v_i^1, v_j^2, w_k^3)}{P(w_k)P(v_i)P(v_j)}$$

$$(3)$$

For example, *"pen wo motte kaku* (Hold a pen and write)" and *"pen de kaite motsu* (Write with a pen and hold)" have different meanings, so by calculating the probability of appearance in permutations of one argument and two predicates, it is possible to train a model in accordance with the difference in meaning caused by the order of the three words: pen, hold, and write. Since function words have no substantial meaning, they are deleted when the morphological analysis described later is performed; *"pen wo motte kaku* (Hold a pen and write)" is converted to the standard form of content words, *"pen, motsu, kaku* (hold, pen, write)," and similarly *"pen de kaite motsu* (Write with a pen and hold)" is converted to *"pen, kaku, motsu* (write, pen, hold)"; in other words, different patterns of permutations can be learned with different likelihoods even through a bag-of-words model composed of the same words.

The generating unit 105 then learns the permutations of one argument and two predicates and the calculated permutation pointwise mutual information, to generate a permutation pointwise-mutual-information model, which is a trained model. The generated permutation pointwise-mutual-information model is stored in the model storage unit 106. The permutation pointwise-mutual-information model is, for example, a model in which the permutation pointwise mutual information of one argument and two predicates is a second-order tensor. In the following, the second-order tensor is referred to as a triaxial tensor.

The model storage unit 106 is a storage unit that stores the permutation pointwise-mutual-information model.

FIG. 2 is a block diagram schematically illustrating a configuration of a computer 120 as an implementation example of the information processing device 100.

The information processing device 100 can be implemented by the computer 120 that includes a non-volatile memory 121, a volatile memory 122, a network interface card (NIC) 123, and a processor 124.

The non-volatile memory 121 is an auxiliary storage that stores data and programs necessary for processing by the information processing device 100. For example, the non-volatile memory 121 is a hard disk drive (HDD) or a solid state drive (SSD).

The volatile memory 122 is a main storage that provides a work area to the processor 124. For example, the volatile memory 122 is a random access memory (RAM).

The NIC 123 is a communication interface for communicating with other devices.

The processor 124 controls the processing by the information processing device 100. For example, the processor 124 is a central processing unit (CPU) or a field-programmable gate array (FPGA). The processor 124 may be a multiprocessor.

For example, the acquiring unit 101, the morphological-analysis performing unit 102, the specifying unit 103, and the generating unit 105 can be implemented by the processor 124 loading the programs stored in the non-volatile memory 121 to the volatile memory 122 and executing these programs. Such programs may be provided via a network or may be recorded and provided on a recording medium. That is, such programs may be provided as, for example, program products.

The model storage unit 106 can be implemented by the non-volatile memory 121.

The communication unit 104 can be implemented by the NIC 123.

The information processing device 100 may be implemented by a processing circuit or may be implemented by software, firmware, or a combination of these. The processing circuit may be a single circuit or a composite circuit.

In other words, the information processing device 100 can be implemented by processing circuitry.

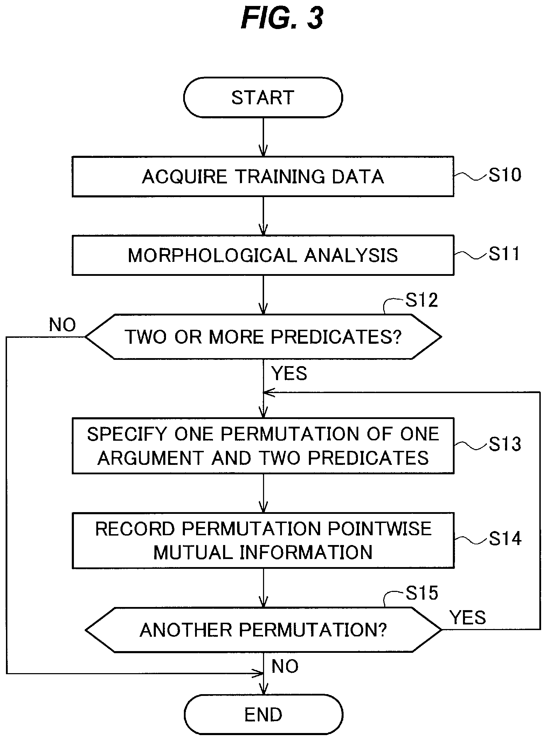

FIG. 3 is a flowchart illustrating an operation of learning a permutation pointwise-mutual-information model by the information processing device 100 according to the first embodiment.

First, the acquiring unit 101 acquires training data (step S10). The acquiring unit 101 then gives the training data to the morphological-analysis performing unit 102.

The morphological-analysis performing unit 102 performs morphological analysis on the character strings represented by the training data, to identify the word classes of the words in the character strings (step S11). In the present embodiment, the morphological-analysis performing unit 102 then deletes words of word classes other than verbs, adjectives, adjective verbs, nouns that can form verbs by adding *"suru,"* and nouns from the words of identified word classes and converts the remaining words into standard forms. The morphological-analysis performing unit 102 then gives word class data representing the words converted into standard forms and the words that do not need to be converted into standard forms, to the specifying unit 103.

The specifying unit 103 determines whether or not the words of identified word classes and represented by the word class data include two or more predicates (step S12). If two or more predicates are included (Yes in step S12), the process proceeds to step S13, and if one or fewer predicates are included (No in step S12), the process ends. In the present embodiment, a word is determined to be a predicate when the word class of the word is any one of a verb, an adjective, an adjective verb, and a noun that can form a verb by adding *"suru."*

In step S13, the specifying unit 103 specifies a permutation consisting of one argument and two predicates in the words of identified word classes and represented by the word class data. The permutation specified here is a permutation for which the permutation pointwise mutual information has not yet been calculated in step S14. The specifying unit 103 then gives permutation data representing the specified permutation to the generating unit 105. Here, the words that are not determined to be predicates are determined to be arguments.

The generating unit 105 connects to a corpus via the communication unit 104 to calculate permutation pointwise mutual information, which is pointwise mutual information of the corpus, of the permutation of one argument and two predicates represented by the permutation data (step S14). The generating unit 105 then learns one argument, two predicates, and the calculated permutation pointwise mutual information, associates these with each other, and registers these in the permutation pointwise-mutual-information model stored in the model storage unit 106.

Next, the specifying unit 103 determines whether or not there is a permutation for which the permutation pointwise mutual information has not yet been calculated (step S15). If such a permutation remains (Yes in step S15), the process returns to step S13, and if no such permutation remains (No in step S15), the process ends.

As described above, according to the first embodiment, pointwise mutual information corresponding to the order of appearance of the one argument and two predicates can be accumulated as a trained model.

In the first embodiment, the generating unit 105 is connected to an external corpus via the communication unit 104, but the first embodiment is not limited to such an example. For example, a corpus may be stored in the model storage unit 106 or another storage unit not illustrated. In such a case, the communication unit 104 is not needed.

In the first embodiment, the model storage unit 106 is provided in the information processing device 100, but the first embodiment is not limited to such an example. For example, the generating unit 105 may store the permutation pointwise-mutual-information model in a storage unit provided in another device (not illustrated) via the communication unit 104. In such a case, the model storage unit 106 in the information processing device 100 is not needed.

**SECOND EMBODIMENT**

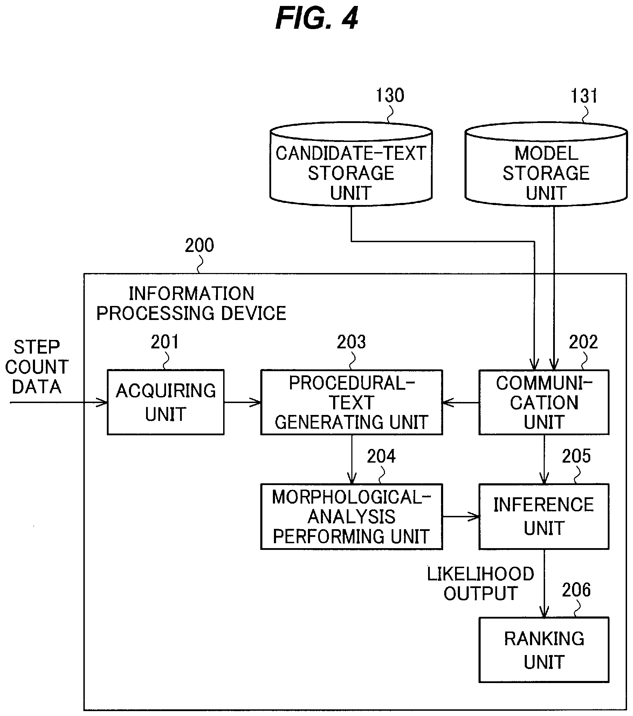

FIG. 4 is a block diagram schematically illustrating a configuration of an information processing device 200 functioning as an inference device according to the second embodiment.

The information processing device 200 includes an acquiring unit 201, a communication unit 202, a procedural-text generating unit 203, a morphological-analysis performing unit 204, an inference unit 205, and a ranking unit 206.

The inference device according to the second embodiment is a device that makes an inference by referring to a permutation pointwise-mutual-information model.

The acquiring unit 201 acquires step count data. The step count data is data representing the number of steps of answering a question text. For example, the acquiring unit 201 may acquire the step count data from another device via the communication unit 202 or may acquire the step count data via an input unit (not illustrated) . Here, the step count is two or more. Thus, the acquiring unit 201 acquires a step count of two or more.

The acquiring unit 201 then gives the step count data to the procedural-text generating unit 203.

The communication unit 202 communicates with other devices. Here, the communication unit 202 communicate with, for example, a server on the Internet to enable reception of data from a candidate-text storage unit 130 or a model storage unit 131 provided in the server.

Here, the candidate-text storage unit 130 stores candidate text data representing candidate texts to be candidates of an answer to the question text.

The model storage unit 131 stores a permutation pointwise-mutual-information model generated through an operation that is the same as that in the first embodiment as a trained model.

The procedural-text generating unit 203 refers to the candidate text data stored in the candidate-text storage unit 130 via the communication unit 202 to extract the same number of candidate texts as the step count represented by the step count data from the acquiring unit 201, and concatenates two or more extracted candidate texts to generate procedural texts. For example, if the step count is "2," one candidate text is "Measure rice into an inner pot," and the next candidate text is "Rince rice," one of the permutations of these candidate texts is the procedural text "Measure rice into inner pot. Rince rice." In this case, another one of the permutations "Rince rice. Measure rice into inner pot" is also a procedural text. In other words, each of the procedural texts consists of two or more extracted candidate texts. The procedural-text generating unit 203 gives procedural text data representing procedural texts to the morphological-analysis performing unit 204.

The morphological-analysis performing unit 204 performs morphological analysis on each of the procedural texts represented by the procedural text data to identify the word class of each word in each of the procedural texts. The morphological-analysis performing unit 204 then gives word class data representing words of identified word class for each procedural text, to the inference unit 205.

The inference unit 205 specifies, on the basis of the identified word classes, a permutation of target terms or words selected from the words of identified word classes represented by the word class data, and refers to the permutation pointwise-mutual-information model stored in the model storage unit 131 via the communication unit 202, to specify the likelihood of the specified permutation. Here, the target terms are assumed to be one argument and two predicates but are not limited to such examples.

If multiple permutations can be specified in one procedural text, the inference unit 205 sets a mean value determined by averaging the likelihoods of the permutations to be a definite likelihood of the procedural text. If only one permutation is specified in one procedural text, the likelihood of that permutation is the definite likelihood. The inference unit 205 gives definite likelihood data representing the definite likelihood of each procedural text to the ranking unit 206. The definite likelihood here is also referred to as ranking likelihood.

The ranking unit 206 ranks procedural texts in accordance with the definite likelihoods represented by the definite likelihood data. For example, the ranking unit 206 ranks the procedural texts in descending order of definite likelihood represented by the definite likelihood data.

The information processing device 200 described above can be implemented by the computer 120 illustrated in FIG. 2.

For example, the acquiring unit 201, the procedural-text generating unit 203, the morphological-analysis performing unit 204, the inference unit 205, and the ranking unit 206 can be implemented by the processor 124 loading the programs stored in the non-volatile memory 121 to the volatile memory 122 and executing these programs.

The communication unit 202 can be implemented by the NIC 123.

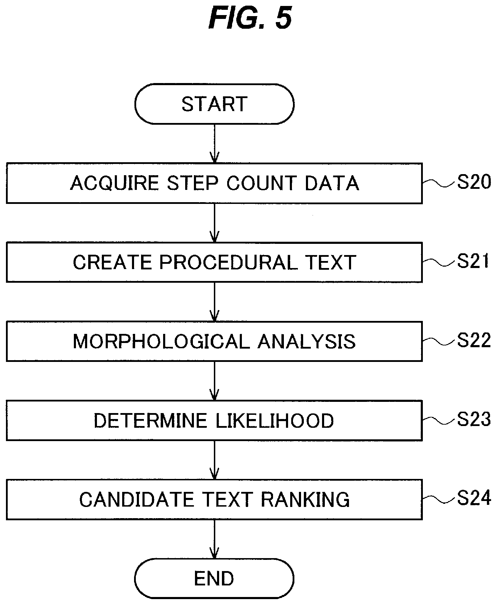

FIG. 5 is a flowchart illustrating an operation for performing common sense inference by the information processing device 200 according to the second embodiment.

First, the acquiring unit 201 acquires step count data (step S20). The acquiring unit 201 then gives the step count data to the procedural-text generating unit 203.

The procedural-text generating unit 203 refers to the candidate text data stored in the candidate-text storage unit 130 via the communication unit 202 to generate a procedural text that concatenates the same number of permutations of candidate texts as the step count represented by the step count data from the acquiring unit 201 (step S21). The procedural-text generating unit 203 then gives procedural text data representing procedural texts to the morphological-analysis performing unit 204.

The morphological-analysis performing unit 204 performs morphological analysis on each of the procedural texts represented by the procedural text data to identify the word class of each of the words in each of the procedural texts (step S22). The morphological-analysis performing unit 204 then gives word class data representing words of identified word classes for each procedural text, to the inference unit 205.

The inference unit 205 refers to the permutation pointwise-mutual-information model stored in the model storage unit 131 via the communication unit 202 to specify the permutations of one argument and two predicates for each procedural text from the words of identified word classes represented by the word class data, and specifies the likelihoods of the permutations. The inference unit 205 then sets the mean value of the likelihoods of the permutations that can be specified in a procedural text as a definite likelihood of the procedural text (step S22). The inference unit 205 gives definite likelihood data representing the definite likelihood of each procedural text to the ranking unit 206.

The ranking unit 206 ranks the procedural texts in descending order of definite likelihood represented by the definite likelihood data (step S23). In this way, the procedural texts can be identified in descending order of the definite likelihoods.

As described above, according to the second embodiment, it is possible to identify procedural texts having high likelihoods in the procedural texts in accordance with the order of appearance of one term and two predicates.

The inference unit 205 uses the average likelihood of multiple permutations but alternatively, the average may be obtained by dividing by the number of words in the procedural text. The inference unit 205 may alternatively use the cosine distance of the tensors of the model for two words of the permutation of the question text and two words of the permutation of the procedural text.

**THIRD EMBODIMENT**

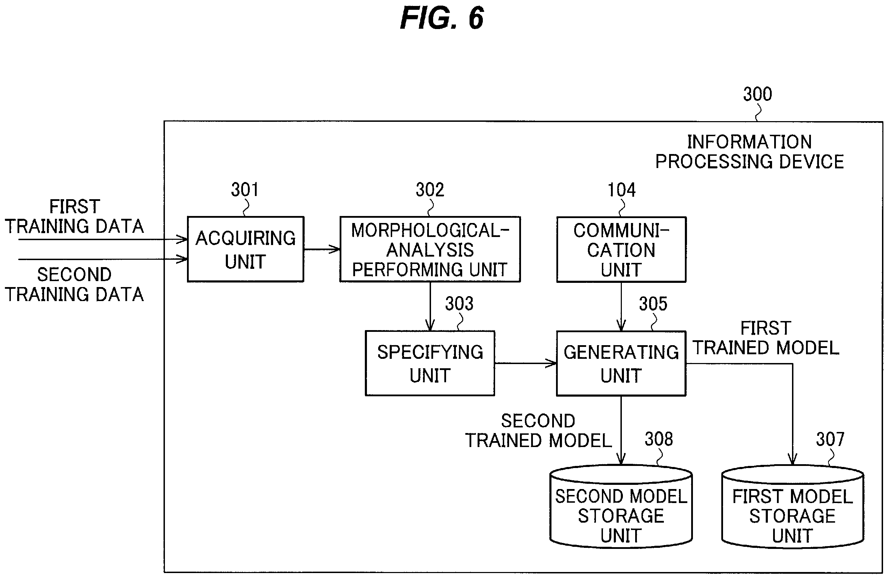

FIG. 6 is a block diagram schematically illustrating a configuration of an information processing device 300 functioning as a learning device according to the third embodiment.

The information processing device 300 includes an acquiring unit 301, a morphological-analysis performing unit 302, a specifying unit 303, a communication unit 104, a generating unit 305, and a first model storage unit 307, and a second model storage unit 308.

The communication unit 104 of the information processing device 300 according to the third embodiment is the same as the communication unit 104 of the information processing device 100 according to the first embodiment.

The acquiring unit 301 acquires first training data and second training data. The first training data and the second training data are text data including character strings. For example, the acquiring unit 301 may acquire the first training data and the second training data from another device via the communication unit 104 or may acquire the first training data and the second training data from a user or the like via an input unit (not illustrated). The acquiring unit 301 then gives the first training data and the second training data to the morphological-analysis performing unit 302.

It is assumed that the first training data represents first character strings consisting of a character string constituting a question text and character strings constituting an answer text to the question text. In other words, the answer text to the question text includes two or more sentences and multiple steps.

It is also assumed that the second training data represents second character strings which are character strings constituting an answer text to a question text. In other words, the answer text to the question text includes two or more sentences and multiple steps.

The morphological-analysis performing unit 302 performs morphological analysis on the character strings represented by each of the first training data and the second training data to identify the word class of each of the words in the character strings.

The morphological-analysis performing unit 302 then gives first word class data representing words of identified word classes in the first character strings, to the specifying unit 303 and gives second word class data representing words of identified word classes in the second character strings, to the specifying unit 303.

The specifying unit 303 specifies, on the basis of the identified word classes, combinations of first target terms or words selected from words of identified word classes represented by the first word class data. Here, the first target terms are assumed to be two arguments and one predicate but are not limited to such examples. The specifying unit 303 then gives combination data representing the specified combination to the generating unit 305.

The specifying unit 303 also specifies, on the basis of the identified word classes, the permutations of second target terms or words selected from words of identified word classes represented by the second word class data. Here, the second target terms are assumed to be one argument and two predicates but are not limited to such examples. The specifying unit 303 then gives permutation data representing the specified permutations to the generating unit 305.

The generating unit 305 connects to a corpus via the communication unit 104 and calculates combination pointwise mutual information, which is the pointwise mutual information in the corpus, of the combination of two arguments and one predicate represented by the combination data.

The combination pointwise mutual information is calculated, for example, by the following equation (4):

$$ PMI(v_l, w_m, w_n) = log_2 \frac{P(v_l, w_m, w_n)}{P(v_l)P(w_m)\,P(w_n)} $$

$$ (4) $$

Here, $v_l$ denotes one predicate included in a combination represented by the combination permutation data; $w_m$ denotes one argument included in the combination represented by the combination data; and $w_n$ denotes the remaining argument included in the combination represented by the combination data.

$P(v_l)$ denotes the probability of appearance of the predicate $v_l$ or the number of predicate $v_l$ relative to the total number of words in the corpus. $P(w_m)$ denotes the probability of appearance of the argument $w_m$ or the number of argument $w_m$ relative to the total number of words in the corpus. $P(w_n)$ denotes the probability of appearance of the argument $w_n$ or the number of argument $w_n$ relative to the total number of words in the corpus. $P(v_l, w_m, w_n)$ denotes the probability of appearance of the combination of the predicate $v_l$, the argument $w_m$, and the argument $w_n$ in the corpus, or is the number of texts including the combination of the predicate $v_l$, the argument $w_m$, and the argument $w_n$ relative to the total number of words in the corpus.

As in the first embodiment, the generating unit 305 connects to a corpus via the communication unit 104 and calculates the combination pointwise mutual information, which is the pointwise mutual information in the corpus, of combinations of one argument and two predicates represented by the combination data.

The generating unit 305 then learns the combinations of two arguments and one predicate and the calculated combination pointwise mutual information to generate a combination pointwise-mutual-information model or a first trained model. The generate combination pointwise-mutual-information model is stored in the first model storage unit 307. The combination pointwise-mutual-information model is, for example, a model in which the combination pointwise mutual information corresponding to combinations of one argument and two predicates is represented by a triaxial tensor.

The generating unit 305 learns the permutations of one argument and two predicates and the calculated permutation pointwise mutual information to generate a permutation pointwise-mutual-information model or a second trained model. The generated permutation pointwise-mutual-information model is stored in the second model storage unit 308. The permutation pointwise-mutual-information model is, for example, a model in which the permutation pointwise mutual information corresponding to one argument and two predicates is represented by a triaxial tensor.

The first model storage unit 307 is a first storage unit that stores the combination pointwise-mutual-information model.

The second model storage unit 308 is a second storage unit that stores the permutation pointwise-mutual-information model.

The information processing device 300 illustrated in FIG. 6 can be implemented by the computer 120 illustrated in FIG. 2.

For example, the acquiring unit 301, the morphological-analysis performing unit 302, the specifying unit 303, and the generating unit 305 can be implemented by the processor 124 loading the programs stored in the non-volatile memory 121 to the volatile memory 122 and executing these programs.

The first model storage unit 307 and the second model storage unit 308 can be implemented by the non-volatile memory 121.

The communication unit 104 can be implemented by the NIC 123.

The information processing device 300 may be implemented by a processing circuit or may be implemented by software, firmware, or a combination of these. The processing circuit may be a single circuit or a composite circuit.

In other words, the information processing device 300 can be implemented by processing circuitry.

Since the operation of generating a permutation pointwise-mutual-information model from the second training data in the third embodiment is the same as that in the first embodiment, here, the operation of generating a combination pointwise-mutual-information model from the first training data is explained.

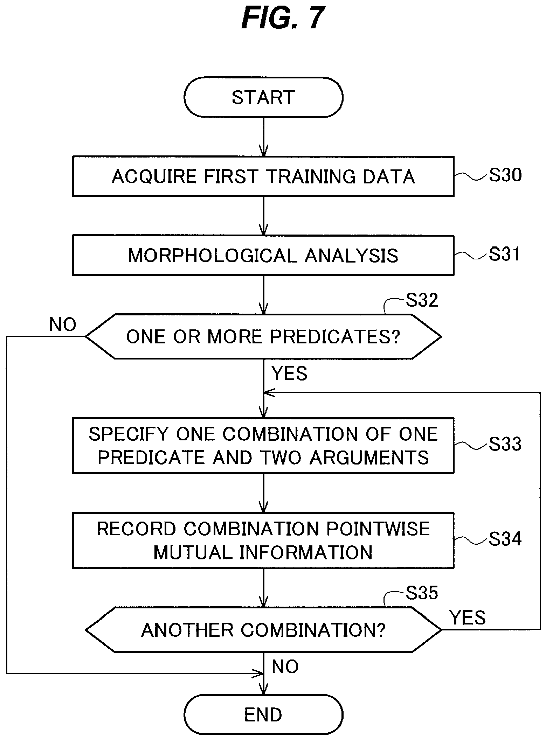

FIG. 7 is a flowchart illustrating an operation of learning a combination pointwise-mutual-information model by the information processing device 300 according to the third embodiment.

First, the acquiring unit 301 acquires first training data (step S30). The acquiring unit 301 then gives the first training data to the morphological-analysis performing unit 302.

The morphological-analysis performing unit 302 performs morphological analysis on the character strings represented by the first training data to identify the word classes of the words in the character strings (step S31). The morphological-analysis performing unit 302 then gives first word class data representing the words of identified word classes to the specifying unit 303.

The specifying unit 303 determines whether or not the words of identified word classes represented by the first word class data include one or more predicates (step S32). If one or more predicates are included (Yes in step S32), the process proceeds to step S33, and if no predicates are included (No in step S32), the process ends.

In step S33, the specifying unit 303 specifies a combination consisting of two arguments and one predicate in the words of identified word classes represented by the word class data. The combination specified here is a combination for which combination pointwise mutual information has not yet been calculated in step S34. The specifying unit 303 then gives combination data representing the specified combination to the generating unit 305.

The generating unit 305 connects to a corpus via the communication unit 104 and calculates combination pointwise mutual information, which is the pointwise mutual information in the corpus, of the combination of two arguments and one predicate represented by the combination data (step S34). The generating unit 305 then learns two arguments, one predicate, and the calculated combination pointwise mutual information, associates these with each other, and registers these in the combination pointwise-mutual-information model stored in the first model storage unit 307.

Next, the specifying unit 303 determines whether or not there is still a combination for which the combination pointwise mutual information has not yet been calculated (step S35). If such a combination remains (Yes in step S35), the process returns to step S33, and if no such combination remains (No in step S35), the process ends.

As described above, according to the third embodiment, pointwise mutual information corresponding to a combination of two arguments and one predicate and pointwise mutual information corresponding to the order in which one argument and two predicates appear can be accumulated as a trained model.

In the third embodiment, the generating unit 305 is connected to an external corpus via the communication unit 104, but the third embodiment is not limited to such an example. For example, a corpus may be stored in the first model storage unit 307, the second model storage unit 308, or another storage unit not illustrated. In such a case, the communication unit 104 is not needed.

In the third embodiment, the first model storage unit 307 and the second model storage unit 308 are provided in the information processing device 300, but the third embodiment is not limited to such an example. For example, the generating unit 305 may store at least one of the combination pointwise-mutual-information model and the permutation pointwise-mutual-information model in a storage unit (not illustrated) provided in another device via the communication unit 104. In such a case, either the first model storage unit 307 or the second model storage unit 308 provided in the information processing device 300 is not needed.

## FOURTH EMBODIMENT

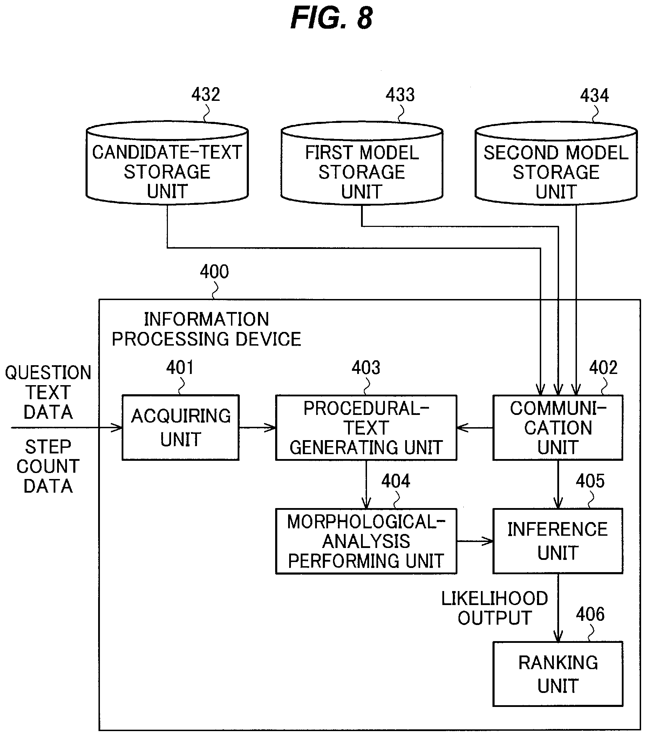

FIG. 8 is a block diagram schematically illustrating a configuration of an information processing device 400 functioning as an inference device according to the fourth embodiment.

The information processing device 400 includes an acquiring unit 401, a communication unit 402, a procedural-text generating unit 403, a morphological-analysis performing unit 404, an inference unit 405, and a ranking unit 406.

The inference device according to the fourth embodiment is a device that makes an inference by referring to a combination pointwise-mutual-information model and a permutation pointwise-mutual-information model.

The acquiring unit 401 acquires question text data and step count data. The question text data is text data representing the character string of a question text. The step count data is data representing the number of steps of answering a question text represented by the question text data. For example, the acquiring unit 401 may acquire the question text data and the step count data from another device via the communication unit 402 or may acquire the question text data and the step count data via an input unit (not illustrated). Here, the step count is two or more. Thus, the acquiring unit 401 acquires the question text and a step count of two or more for answering the question text.

The acquiring unit 401 then gives the question text data and the step count data to the procedural-text generating unit 403.

The communication unit 402 communicates with other devices. Here, the communication unit 402 can communicate with, for example, a server on the Internet to receive data from a candidate-text storage unit 432, a first model storage unit 433, or a second model storage unit 434 provided in the server.

Here, the candidate-text storage unit 432 stores candidate text data representing candidate texts to be candidates of an answer to the question text.

The first model storage unit 433 stores a combination pointwise-mutual-information model generated through the same operation as that in the third embodiment as a first trained model.

The second model storage unit 434 stores a permutation pointwise-mutual-information model generated through the same operation as that in the first embodiment as a second trained model.

The procedural-text generating unit 403 refers to the candidate text data stored in the candidate-text storage unit 432 via the communication unit 402 to extract the same number of candidate texts as the step count represented by the step count data from the acquiring unit 401, and concatenates two or more extracted candidate texts to generate multiple procedural texts. In other words, each of the procedural texts includes two or more candidate texts.

Furthermore, the procedural-text generating unit 403 generates question-answering procedural texts by concatenating the question texts represented by the question text data in front of the generated procedural texts.

For example, if a question text represented by the question text data is "To cook rice" and the procedural text is "Measure rice into inner pot. Rince rice," the question-answering procedural text is "To cook rice.

Measure rice into inner pot. Rince rice."

The procedural-text generating unit 403 gives question-answering procedural-text data representing question-answering procedural texts to the morphological-analysis performing unit 404.

The morphological-analysis performing unit 404 performs morphological analysis on each of the question-answering procedural texts represented by the question-answering procedural-text data to identify the word class of each of the words in each of the question-answering procedural texts.

The morphological-analysis performing unit 404 then gives first word class data representing the words of identified word classes for each question-answering procedural text, to the inference unit 405.

The inference unit 405 specifies, on the basis of the identified word classes, a combination of first target terms or words selected from the words of identified word classes represented by the first word class data, and refers to the combination pointwise-mutual-information model stored in the first model storage unit 433 via the communication unit 402 to specify the likelihood of the combination. The first target terms are assumed to be two arguments and one predicate but are not limited to such examples. When multiple combinations can be specified in one question-answering procedural text, the inference unit 405 sets a mean value determined by averaging the likelihoods of the combinations that can be specified in the question-answering procedural text, as a definite likelihood of the question-answering procedural text. When only one combination is specified in one question-answering procedural text, the likelihood of the combination is defined as the definite likelihood. The definite likelihood specified here is also referred to as first likelihood.

Next, the inference unit 405 extracts question-answering procedural texts by narrowing down the procedural texts with the definite likelihood or first likelihood. For example, the inference unit 405 extracts a predetermined number of question-answering procedural texts in descending order of the definite likelihood or first likelihood. The inference unit 405 then generates target procedural texts by removing the question texts from the extracted question-answering procedural texts. The inference unit 405 then generates second word class data representing words of identified word classes included in each of the generated target procedural texts.

Furthermore, the inference unit 405 specifies, on the basis of the identified word classes, the permutation of second target terms or words of predetermined word classes in the words of identified word classes represented by the second word class data. The inference unit 405 then refers to the permutation pointwise-mutual-information model stored in the second model storage unit 434 via the communication unit 402 to specify the likelihood of the permutation of the second target terms. Here, the second target terms are assumed to be one argument and two predicates but are not limited to such examples.

When multiple permutations can be specified in one procedural text, the inference unit 405 sets a mean value determined by averaging the likelihoods of the permutations as a definite likelihood of the procedural text. When only one permutation can be specified in one procedural text, the likelihood of the permutation is the definite likelihood. The inference unit 405 gives definite likelihood data representing the definite likelihood of each procedural text to the ranking unit 406. The definite likelihood specified here is also referred to as ranking likelihood.

The ranking unit 406 ranks the procedural texts in accordance with the definite likelihoods represented by the definite likelihood data. For example, the ranking unit 406 ranks the procedural texts in descending order of the definite likelihoods represented by the definite likelihood data.

The information processing device 400 described above can also be implemented by the computer 120 illustrated in FIG. 2.

For example, the acquiring unit 401, the procedural-text generating unit 403, the morphological-analysis performing unit 404, the inference unit 405, and the ranking unit 406 can be implemented by the processor 124 loading the programs stored in the non-volatile memory 121 to the volatile memory 122 and executing these programs.

The communication unit 402 can be implemented by the NIC 123.

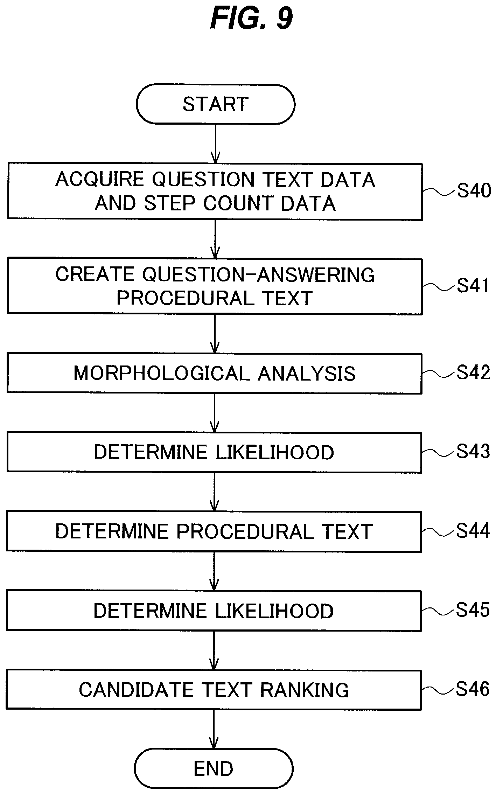

FIG. 9 is a flowchart illustrating an operation for performing a common sense inference by the information processing device 400 according to the fourth embodiment.

First, the acquiring unit 401 acquires question text data and step count data (step S40). The acquiring unit 401 then gives the question text data and the step count data to the procedural-text generating unit 403.

The procedural-text generating unit 403 refers to the candidate text data stored in the candidate-text storage unit 432 via the communication unit 402 to generate a procedural text that concatenates the same number of permutations of candidate texts as the step count represented by the step count data from the acquiring unit 401, and concatenates a question text represented by the question text data to the front of the procedural text to generate a question-answering procedural text (step S41). The procedural-text generating unit 403 then gives question-answering procedural-text data representing question-answering procedural texts to the morphological-analysis performing unit 404.

The morphological-analysis performing unit 404 performs morphological analysis on each of the question-answering procedural texts represented by the question-answering procedural-text data to identify the word class of each of the words included in the question-answering procedural texts (step S42). The morphological-analysis performing unit 404 then gives first word class data representing the words of identified word classes for each question-answering procedural text, to the inference unit 405.

The inference unit 405 refers to the combination pointwise-mutual-information model stored in the first model storage unit 433 via the communication unit 402 to specify combinations of two arguments and one predicate for each question-answering procedural text in the words of identified word classes represented by the first word class data, and specify the likelihood of the combination. The inference unit 405 then sets the mean value of the likelihoods of the combinations that can be specified from one question-answering procedural text as the definite likelihood of the question-answering procedural text (step S43) .

The inference unit 405 narrows down the question-answering procedural texts in descending order of the definite likelihoods specified in step S43 (step S44). For example, the inference unit 405 performs the narrowing by extracting a predetermined number of question-answering procedural texts in descending order of the definite likelihoods specified in step S43. The inference unit 405 then deletes the words in question texts from the words of identified word classes corresponding to the extracted question-answering procedural texts in the word class data, and specifies the procedural texts resulting from deleting the question texts from the specified question-answering procedural texts. The inference unit 405 generates, for each of the specified procedural texts, second word class data representing words of identified word classes included in the corresponding procedural text.

Next, the inference unit 405 refers to the permutation pointwise-mutual-information model stored in the second model storage unit 434 via the communication unit 402 to specify the permutations of one argument and two predicates for each of the procedural texts in the words of identified word classes represented by the second word class data, and specify the likelihoods of the permutations. The inference unit 405 then sets the mean value of the likelihoods of the permutations that can be specified in a procedural text as a definite likelihood of the procedural text (step S45). The inference unit 405 gives the definite likelihood data representing the definite likelihood of each procedural text specified in step S45 to the ranking unit 406.

The ranking unit 406 ranks the procedural texts in descending order of the definite likelihoods represented by the definite likelihood data (step S46). In this way, the procedural texts can be identified in descending order of the definite likelihoods.

As described above, according to the fourth embodiment, it is possible to specify a procedural text of a high likelihood from question-answering procedural texts in accordance with the order of appearance of two arguments and one predicate, and to identify a procedural text of a high likelihood in the specified procedural texts in accordance with the order of appearance of one argument and two predicates.

## FIFTH EMBODIMENT

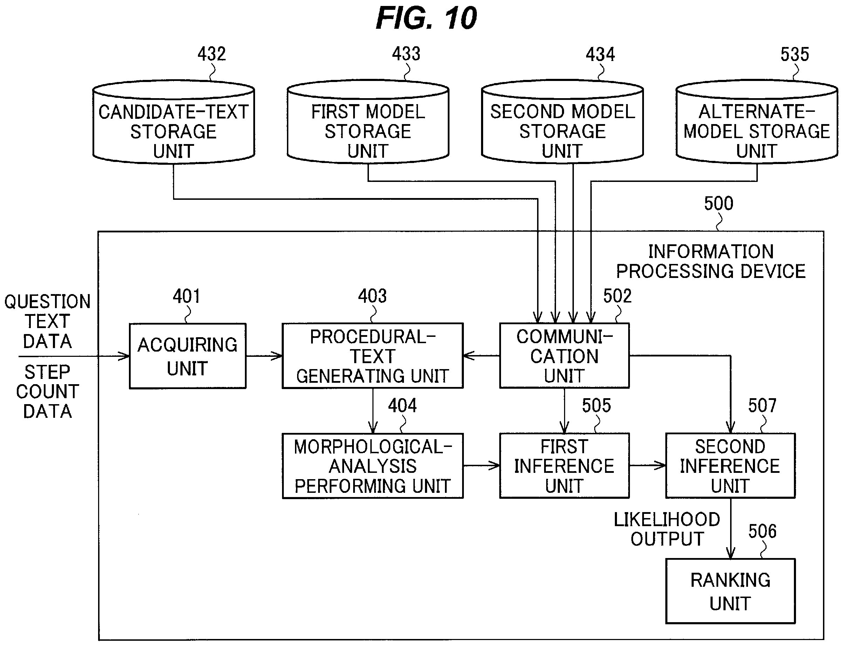

FIG. 10 is a block diagram schematically illustrating a configuration of an information processing device 500 functioning as an inference device according to the fifth embodiment.

The information processing device 500 includes an acquiring unit 401, a communication unit 502, a procedural-text generating unit 403, a morphological-analysis performing unit 404, a first inference unit 505, a ranking unit 506, and a second inference unit 507.

The inference device according to the fifth embodiment is a device that makes an inference by referring to a combination pointwise-mutual-information model, a permutation pointwise-mutual-information model, and a trained model other than the combination pointwise-mutual-information model and the permutation pointwise-mutual-information model.

The acquiring unit 401, the procedural-text generating unit 403, and the morphological-analysis performing unit 404 of the information processing device 500 according to the fifth embodiment are respectively the same as the acquiring unit 401, the procedure-statement generating unit 403, and the morphological-analysis performing unit 404 of the information processing device 400 according to the fourth embodiment.

The communication unit 502 communicates with other devices. Here, the communication unit 502 can communicate with, for example, a server on the Internet to receive data from a candidate-text storage unit 432, a first model storage unit 433, a second model storage unit 434, or an alternate-model storage unit 535 provided in the server.

Here, the candidate-text storage unit 432, the first model storage unit 433, and the second model storage unit 434 according to the fifth embodiment are respectively the same as the candidate-text storage unit 432, the first model storage unit 433, and the second model storage unit 434 according to the fourth embodiment.

The alternate-model storage unit 535 stores an alternate model or a trained model that has been trained by a theory different from the combination pointwise-mutual-information model and the permutation pointwise-mutual-information model. Examples of alternate models include trained models based on known theories such as trained models based on Bidirectional Encoder Representations from Transformers (BERT), trained models based on a Robustly Optimized BERT Pretraining Approach (RoBERTa), trained models based on Generative Pre-trained Transformer 2 (GPT-2), trained models based on Text-to-Text Transfer Transformer (T5), and trained models based on Turing Natural Language Generation (NLG) or Generative Pre-trained Transformer 3 (GPT-3).

Here, the trained model based on BERT is used as the alternate model. The alternate model is also referred to as a target trained model.

Similar to the inference unit 405 according to the fourth embodiment, the first inference unit 505 uses the combination pointwise-mutual-information model stored in the first model storage unit 433 and the permutation pointwise-mutual-information model stored in the second model storage unit 434 to calculate the definite likelihood for each procedural text. The first inference unit 505 then specifies a predetermined number of procedural texts in descending order of the calculated definite likelihoods, generates narrowed procedural text data representing the specified procedural texts, and gives the narrowed procedural text data to the second inference unit 507.

For example, the first inference unit 505 specifies, on the basis of the word classes identified by the morphological-analysis performing unit 404, a combination of first target terms or words selected from question-answering procedural texts. The first inference unit 505 refers to the combination pointwise-mutual-information model stored in the first model storage unit 433 to calculate the likelihood of the specified combination to specify a first likelihood or the likelihood of each procedural text.

Furthermore, the first inference unit 505 deletes question texts from the question-answering procedural texts extracted by narrowing down the procedural texts with the first likelihoods to generate first target procedural texts. The first inference unit 505 then specifies, on the basis of the word classes identified by the morphological-analysis performing unit 404, a permutation of second target terms or words selected from each of the first target procedural texts, and refers to the permutation pointwise-mutual-information model stored in the second model storage unit 434 to specify a second likelihood or the likelihood of each of the first target procedural texts by calculating the likelihood of the specified permutation. The first inference unit 505 narrows down the first target procedural texts with the second likelihoods to extract second target procedural texts.

Finally, the first inference unit 505 generates narrowed procedural text data representing the extracted second target procedural texts.

The second inference unit 507 refers to the alternate model stored in the alternate-model storage unit 535 and specifies the ranking likelihood or the likelihood of each of the second target procedural texts.

For example, the second inference unit 507 refers to the alternate model stored in the alternate-model storage unit 535 via the communication unit 502 and calculates the likelihood of the correctness of the context of each procedural text represented by the narrowed procedural text data. In the present embodiment, the average likelihood of a word sequence in a question-answering procedural text is used to determine the correctness of the context. The second inference unit 507 then generates likelihood data representing the calculated likelihood for each procedural text and gives the likelihood data to the ranking unit 506. The likelihood represented by the likelihood data here is the ranking likelihood.

The ranking unit 506 ranks multiple procedural texts in accordance with the likelihoods represented by the likelihood data. Specifically, the ranking unit 506 ranks the procedural texts in descending order of likelihoods represented by the likelihood data.

The information processing device 500 described above can be implemented by the computer 120 illustrated in FIG. 2.

For example, the acquiring unit 401, the procedural-text generating unit 403, the morphological-analysis performing unit 404, the first inference unit 505, the ranking unit 506, and the second inference unit 507 can be implemented by the processor 124 loading the programs stored in the non-volatile memory 121 to the volatile memory 122 and executing these programs.

The communication unit 502 can be implemented by the NIC 123.

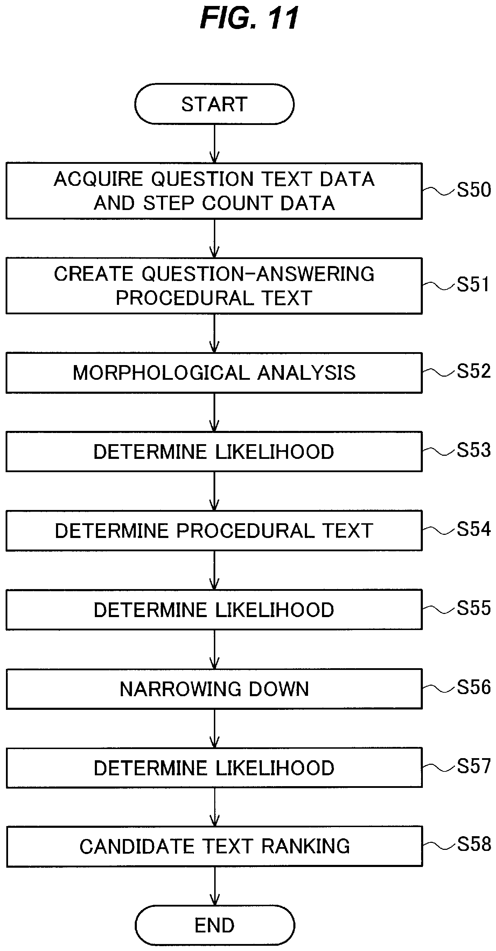

FIG. 11 is a flowchart illustrating an operation for performing a common sense inference of the information processing device 500 according to the fifth embodiment.

First, the acquiring unit 401 acquires question text data and step count data (step S50). The acquiring unit 401 then gives the question text data and the step count data to the procedural-text generating unit 403.

The procedural-text generating unit 403 refers to the candidate text data stored in the candidate-text storage unit 432 via the communication unit 502 to generate a procedural text that concatenates the same number of permutations of candidate texts as the step count represented by the step count data from the acquiring unit 401, and concatenates a question text represented by the question text data to the front of the procedural text to generate a question-answering procedural text (step S51). The procedural-text generating unit 403 then gives question-answering procedural-text data representing question-answering procedural texts to the morphological-analysis performing unit 404.

The morphological-analysis performing unit 404 performs morphological analysis on each of the question-answering procedural texts represented by the question-answering procedural-text data to identify the word class of each of the words included in the question-answering procedural texts (step S52). The morphological-analysis performing unit 404 then gives first word class data representing the words of identified word classes for each question-answering procedural text to the first inference unit 505.

The first inference unit 505 refers to the combination pointwise-mutual-information model stored in the first model storage unit 433 via the communication unit 502 to specify combinations of two arguments and one predicate for each question-answering procedural text in the words of identified word classes represented by the first word class data, and specifies the likelihood of the combination. The first inference unit 505 then sets the mean value by averaging the likelihoods of the combinations that can be specified from one question-answering procedural text as the definite likelihood of the question-answering procedural text (step S53).

The first inference unit 505 narrows down the question-answering procedural texts in descending order of the definite likelihoods specified in step S53 (step S54). For example, the first inference unit 505 extracts a predetermined number of question-answering procedural texts in descending order of the definite likelihoods specified in step S53. The first inference unit 505 deletes the words in question texts from the words of identified word classes corresponding to the extracted question-answering procedural texts in the word class data, and specifies the procedural texts resulting from deleting the question texts from the specified question-answering procedural texts. The first inference unit 505 then generates, for each of the specified procedural texts, second word class data representing words of identified word classes included in the corresponding procedural text.

Next, the first inference unit 505 refers to the permutation pointwise-mutual-information model stored in the second model storage unit 434 via the communication unit 502 to specify the permutations of one argument and two predicates for each of the procedural texts in the words of identified word classes represented by the second word class data, and specifies the likelihoods of the permutations. The first inference unit 505 then sets the mean value by averaging the likelihoods of the permutations that can be specified in a procedural text as a definite likelihood of the procedural text (step S55).

Next, the first inference unit 505 narrows down the procedural texts in descending order of the definite likelihoods calculated in step S55 (step S56). For example, the first inference unit 505 extracts a predetermined number of procedural texts in descending order of the definite likelihoods calculated in step S55. The first inference unit 505 then generates narrowed procedural text data indicating the extracted procedural texts and gives the narrowed procedural text data to the second inference unit 507.

The second inference unit 507 refers to the alternate model stored in the alternate-model storage unit 535 via the communication unit 502 and calculates the likelihood of the correctness of the context of each procedural text represented by the narrowed procedural text data (step S57) . The second inference unit 507 then generates likelihood data representing the calculated likelihood for each procedural text and gives the likelihood data to the ranking unit 506.

The ranking unit 506 ranks the procedural texts in descending order of the likelihoods represented by the likelihood data (step S57). In this way, the procedural texts can be identified in descending order of likelihood.

As described above, according to the fifth embodiment, it is possible to identify procedural texts with high likelihoods in the question-answering procedural texts in accordance with the order of appearance of two arguments and one predicate and narrow down, in the identified procedural texts, the procedural texts with high likelihoods in accordance with the order of appearance of one argument and two predicates. Then, by making an inference about the likelihoods of the narrowed-down procedural texts through, for example, BERT, the processing load can be reduced even if a theory with a heavy processing load is used.

**DESCRIPTION OF REFERENCE CHARACTERS**

100 information processing device; 101 acquiring unit; 102 morphological-analysis performing unit; 103 specifying unit; 104 communication unit; 105 generating unit; 106 model storage unit; 200 information processing device; 201 acquiring unit; 202 communication unit; 203 procedural-text generating unit; 204 morphological-analysis performing unit; 205 inference unit; 206 ranking unit; 300 information processing device; 301 acquiring unit; 302 morphological-analysis performing unit; 303 specifying unit; 305 generating unit; 307 first model storage unit; 308 second model storage unit; 400 information processing device; 401 acquiring unit; 402 communication unit; 403 procedural-text generating unit; 404 morphological-analysis performing unit; 405 inference unit; 406 ranking unit; 500 information processing device; 502 communication unit; 505 first inference unit; 506 ranking unit; 507 second inference unit.

**Claims**

1.  A learning device comprising:

    a morphological-analysis performing unit configured to perform morphological analysis on a plurality of character strings to identify word classes of a plurality of words included in the character strings;
    a specifying unit configured to specify a permutation of a plurality of target terms on a basis of the identified word class, the target terms being words selected from the character strings; and
    a generating unit configured to calculate pointwise mutual information of the permutation in a corpus and learn the permutation and the pointwise mutual information of the permutation to generate a permutation pointwise-mutual-information model, the pointwise mutual information of the permutation being permutation pointwise mutual information, the permutation pointwise-mutual-information model being a trained model.

2.  The learning device according to claim 1, wherein the target terms are one argument and two predicates.

3.  The learning device according to claim 2, wherein the argument is a word that serves as a subject or an object.

4.  The learning device according to any one of claims 1 to 3, wherein the character strings are an answer to a question text.

5.  A learning device comprising:

    a morphological-analysis performing unit configured to perform morphological analysis on first character strings to identify word classes of a plurality of words included in the first character strings, and to perform morphological analysis on a plurality of second character strings constituting an answer text to the question text to identify word classes of a plurality of words included in the second character strings, the first character strings including a character string constituting a question text and a plurality of character strings constituting an answer text to the question text;
    a specifying unit configured to specify a combination of first target terms on a basis of the word classes identified for the first character strings, and to specify a permutation of second target terms on a basis of the word classes identified for the second character strings, the first target terms being words selected from the first character strings, the second target terms being words selected from second character strings; and
    a generating unit configured to generate a combination pointwise-mutual-information model by calculating pointwise mutual information of the combination in a corpus and learning the combination and the pointwise mutual information of the combination, and to generate a permutation pointwise-mutual-information model by calculating pointwise mutual information of the permutation in a corpus and learning the permutation and the pointwise mutual information of the permutation, the pointwise mutual information of the combination being combination pointwise mutual information, the combination pointwise-mutual-information model being a trained model, the pointwise mutual information of the permutation being permutation pointwise mutual information, the permutation pointwise-mutual-information model being a trained model.

6.  The learning device according to claim 5, wherein,

    the first target terms are two arguments and one predicate, and
    the second target terms are one argument and two predicates.

7. The learning device according to claim 6, wherein the argument is a word that serves as a subject or an object.

8. An inference device configured to make an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the inference device comprising:

an acquiring unit configured to acquire a step count of two or more for an answer to a question text;
a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts;
a morphological-analysis performing unit configured to perform morphological analysis on each of the procedural texts to identify word classes of a plurality of words included in each of the procedural texts; and
an inference unit configured to specify a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

9. The inference device according to claim 8, wherein the target terms are one argument and two predicates.

10. The inference device according to claim 9, wherein the argument is a word that serves as a subject or an object.

11. The inference device according to any one of claims 8 to 10, further comprising:
a ranking unit configured to rank the procedural texts in accordance with the ranking likelihoods.

12. The inference device according to any one of claims 8 to 11, wherein when a plurality of permutations are specified in one of the procedural texts, the inference unit specifies a mean value of a plurality of likelihoods calculated for the permutations as the ranking likelihood of the one of the procedural texts, and when only one permutation is specified in the one of the procedural texts, the inference unit specifies a likelihood calculated for the only one permutation as the ranking likelihood of the one of the procedural texts.

13. An inference device configured to make an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the inference device comprising:

an acquiring unit configured to acquire a question text and a step count of two or more for an answer to the question text;
a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts and to generate a plurality of question-answering procedural texts by concatenating the question text in front of each of the procedural texts;
a morphological-analysis performing unit configured to perform morphological analysis on each of the question-answering procedural texts to identify word classes of a plurality of words included in each of the question-answering procedural texts; and
an inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of target procedural texts by deleting the question text from a plurality of question-answering procedural texts extracted by narrowing down the procedural texts with the first likelihood, and specify a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

14. The inference device according to claim 13, wherein,

the first target terms are two arguments and one predicate, and
the second target terms are one argument and two predicates.

15. The inference device according to claim 14, wherein the argument is a word that serves as a subject or an object.

16. The inference device according to any one of claims 13 to 15, further comprising:
a ranking unit configured to rank the procedural texts in accordance with the ranking likelihoods.

17. The inference device according to any one of claims 13 to 16, wherein when a plurality of permutations are specified in one of the procedural texts, the inference unit specifies a mean value of a plurality of likelihoods calculated for the permutations as the ranking likelihood of the one of the procedural texts, and when only one permutation is specified in the one of the procedural texts, the inference unit specifies a likelihood calculated for the only one permutation as the ranking likelihood of the one of the procedural texts.

18. An inference device configured to make an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the inference device comprising:

an acquiring unit configured to acquire a question text and a step count of two or more for an answer to the question text;
a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts and to generate a plurality of question-answering procedural texts by concatenating the question text in front of each of the procedural texts;
a morphological-analysis performing unit configured to perform morphological analysis on each of the question-answering procedural texts to identify word classes of a plurality of words included in each of the question-answering procedural texts;
a first inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of first target procedural texts by deleting the question text from a plurality of question-answering procedural texts extracted by narrowing down the procedural texts with the first likelihoods, specify a permutation of a plurality of second target terms selected from each of the first target procedural texts on a basis of the identified word classes, refer to the permutation pointwise-mutual-information model, and specify a likelihood of the specified permutation, to specify a second likelihood of each of the first target procedural texts, and narrow down the first target procedural texts with the second likelihoods to extract a plurality of second target procedural texts; and
a second inference unit configured to refer to the target trained model to specify a ranking likelihood, the ranking likelihood being a likelihood of each of the second target procedural texts.

19. The inference device according to claim 18, wherein,

the first target terms are two arguments and one predicate, and
the second target terms are one argument and two predicates.

20. The inference device according to claim 19, wherein the argument is a word that serves as a subject or an object.

21. The inference device according to any one of claims 18 to 20, further comprising:
a ranking unit configured to rank the procedural texts in accordance with the ranking likelihoods.

22. A program that causes a computer to function as:

a morphological-analysis performing unit configured to perform morphological analysis on a plurality of character strings to identify word classes of a plurality of words included in the character strings;
a specifying unit configured to specify a permutation of a plurality of target terms on a basis of the identified word classes, the target terms being words selected from the character strings; and
a generating unit configured to calculate pointwise mutual information of the permutation in a corpus and learn the permutation and the pointwise mutual information of the permutation to generate a permutation pointwise-mutual-information model, the pointwise mutual information of the permutation being permutation pointwise mutual information, the permutation pointwise-mutual-information model being a trained model.

23. A program that causes a computer to function as :

a morphological-analysis performing unit configured to perform morphological analysis on first character strings to identify word classes of a plurality of words included in the first character strings, and to perform morphological analysis on a plurality of second character strings constituting an answer text to the question text to identify word classes of a plurality of words included in the second character strings, the first character strings including a character string constituting a question text and a plurality of character strings constituting an answer text to the question text;
a specifying unit configured to specify a combination of first target terms on a basis of the word classes identified for the first character strings, and to specify a permutation of second target terms on a basis of the word classes identified for the second character strings, the first target terms being words selected from the first character strings, the second target terms being words selected from second character strings; and
a generating unit configured to generate a combination pointwise-mutual-information model by calculating pointwise mutual information of the combination in a corpus and learning the combination and the pointwise mutual information of the combination, and to generate a permutation pointwise-mutual-information model by calculating pointwise mutual information of the permutation in a corpus and learning the permutation and the pointwise mutual information of the permutation, the pointwise mutual information of the combination being combination pointwise mutual information, the combination pointwise-mutual-information model being a trained model, the pointwise mutual information of the permutation being permutation pointwise mutual information, the permutation pointwise-mutual-information model being a trained model.

24. A program that causes a computer to function as an inference device configured to make an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the program further causing the computer to function as:

an acquiring unit configured to acquire a step count of two or more for an answer to a question text;
a procedural-text generating unit configured to extract a same number of candidate texts as the step count from the candidate texts to be candidates of the answer to the question text and concatenate the two or more extracted candidate texts, to generate a plurality of procedural texts each including the two or more candidate texts;
a morphological-analysis performing unit configured to perform morphological analysis on each of the procedural texts to identify word classes of a plurality of words included in each of the procedural texts; and
an inference unit configured to specify a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

25. A program that causes a computer to function as an inference device configured to make an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the program further causing the computer to function as:

an acquiring unit configured to acquire a question text and a step count of two or more for an answer to the question text;
a procedural-text generating unit configured to extract a same number of candidate texts as the step count from the candidate texts to be candidates of an answer to the question text and concatenate the two or more extracted candidate texts, to generate a plurality of procedural texts each including the two or more candidate texts and to generate a plurality of question-answering procedural texts by concatenating the question text in front of each of the procedural texts;
a morphological-analysis performing unit configured to perform morphological analysis on each of the question-answering procedural texts to identify word classes of a plurality of words included in each of the question-answering procedural texts; and
an inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of target procedural texts by deleting the question text from a plurality of question-answering procedural texts extracted by narrowing down the procedural texts with the first likelihood, and specify a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

26. A program that causes a computer to function as an inference device configured to make an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the program further causing the computer to function as:

an acquiring unit configured to acquire a question text and a step count of two or more for an answer to the question text;
a procedural-text generating unit configured to extract a same number of candidate texts as the step count from the candidate texts to be candidates of an answer to the question text and concatenate the two or more extracted candidate texts, to generate a plurality of procedural texts each including the two or more candidate texts and to generate a plurality of question-answering procedural texts by concatenating the question text in front of each of the procedural texts;
a morphological-analysis performing unit configured to perform morphological analysis on each of the question-answering procedural texts to identify word classes of a plurality of words included in each of the question-answering procedural texts;
a first inference unit configured to specify a combination of a plurality of first target terms selected from each of the question-answering procedural texts on a basis of the identified word classes, refer to the combination pointwise-mutual-information model, and specify a likelihood of the specified combination, to specify a first likelihood of each of the procedural texts, generate a plurality of first target procedural texts by deleting the question text from a plurality of question-answering procedural texts extracted by narrowing down the procedural texts with the first likelihoods, specify a permutation of a plurality of second target terms selected from each of the first target procedural texts on a basis of the identified word classes, refer to the permutation pointwise-mutual-information model, and specify a likelihood of the specified permutation, to specify a second likelihood of each of the first target procedural texts, and narrow down the first target procedural texts with the second likelihoods to extract a plurality of second target procedural texts; and
a second inference unit configured to refer to the target trained model to specify a ranking likelihood, the ranking likelihood being a likelihood of each of the second target procedural texts.

27. A learning method comprising:

performing morphological analysis on a plurality of character strings to identify word classes of a plurality of words included in the character strings;

specifying a permutation of a plurality of target terms on a basis of the identified word classes, the target terms being a plurality of words selected from the character strings;

calculating permutation pointwise mutual information, the permutation pointwise mutual information being pointwise mutual information of the permutation in a corpus; and

generating a permutation pointwise-mutual-information model by learning the permutation and the permutation pointwise mutual information, the permutation pointwise-mutual-information model being a trained model.

28. A learning method comprising:

performing morphological analysis on a plurality of first character strings to identify word classes of a plurality of words included in the first character strings, the first character strings including a character string constituting a question text and a plurality of character strings constituting an answer text to the question text;

performing morphological analysis on a plurality of second character strings to identify word classes of a plurality of words included in the second character strings, the second character strings being a plurality of character strings constituting an answer text to the question text;

specifying a combination of a plurality of first target terms on a basis of the word classes identified in the first character strings, the first target terms being a plurality of words selected from the first character strings;

specifying a permutation of a plurality of second target terms on a basis of the word classes identified in the second character strings, the second target terms being a plurality of words selected from the second character strings;

calculating combination pointwise mutual information, the combination pointwise mutual information being pointwise mutual information of the combination in a corpus;

generating a combination pointwise-mutual-information model by learning the combination and the combination pointwise mutual information, the combination pointwise-mutual-information model being a trained model;

calculating permutation pointwise mutual information, the permutation pointwise mutual information being pointwise mutual information of the permutation in a corpus; and

generating a permutation pointwise-mutual-information model by learning the permutation and the permutation pointwise mutual information, the permutation pointwise-mutual-information model being a trained model.

29. An inference method of making an inference by referring to a permutation pointwise-mutual-information model, the permutation pointwise-mutual-information model being a trained model trained by a permutation of a plurality of words of a predetermined word class and permutation pointwise mutual information, the permutation pointwise mutual information being pointwise mutual information of the permutation in a corpus, the method comprising:

acquiring a step count of two or more for an answer to a question text;

extracting a same number of candidate texts as the step count from the candidate texts to be candidates of the answer to the question text and concatenating the two or more extracted candidate texts, to generate a plurality of procedural texts each including the two or more candidate texts;

performing morphological analysis on each of the procedural texts to identify word classes of a plurality of words included in each of the procedural texts; and

specifying a permutation of a plurality of target terms on a basis of the identified word classes and specify a likelihood of the specified permutation by referring to the permutation pointwise-mutual-information model, to specify a ranking likelihood, the target terms being words selected from each of the procedural texts, the ranking likelihood being a likelihood of each of the procedural texts.

30. An inference method of making an inference by referring to a combination pointwise-mutual-information model and a permutation pointwise-mutual-information model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the method comprising:

acquiring a question text and a step count of two or more for an answer to the question text;

extracting a same number of candidate texts as the step count from the candidate texts to be candidates of the answer to the question text and concatenating the two or more extracted candidate texts, to generate a plurality of procedural texts each including the two or more candidate texts;

generating a plurality of question-answering procedural texts by concatenating the question text in front of each of the procedural texts;

performing morphological analysis on each of the question-answering procedural texts to identify word classes of a plurality of words included in each of the question-answering procedural texts;

specifying a combination of a plurality of first target terms selected from each of the question-answering procedural texts on a basis of the identified word classes, referring to the combination pointwise-mutual-information model, and specifying a likelihood of the specified combination, to specify a first likelihood, the first likelihood being a likelihood of each of the procedural texts;

generating a plurality of target procedural texts by narrowing down the procedural texts with the first likelihoods to delete the question text from the extracted question-answering procedural texts; and

specifying a permutation of a plurality of second target terms selected from each of the target procedural texts on a basis of the identified word classes, refer to the permutation pointwise-mutual-information model, and specify a likelihood of the specified permutation, to specify a ranking likelihood, the ranking likelihood being a likelihood of each of the procedural texts.

31. An inference method of making an inference by referring to a combination pointwise-mutual-information model, a permutation pointwise-mutual-information model, and a target trained model, the combination pointwise-mutual-information model being a trained model trained by a combination of words of a predetermined word class and combination pointwise mutual information, the combination pointwise mutual information being pointwise mutual information of the combination in a corpus, the permutation pointwise-mutual-information model being a trained model trained by a permutation of words of a predetermined word class and permutation pointwise mutual information, the permutation pointwise mutual information being pointwise mutual information of the permutation in a corpus, the target trained model being a trained model different from the combination pointwise-mutual-information model and the permutation pointwise-mutual-information model, the method comprising:

acquiring a question text and a step count of two or more for an answer to the question text;

extracting a same number of candidate texts as the step count from the candidate texts to be candidates of the answer to the question text and concatenating the two or more extracted candidate texts, to generate a plurality of procedural texts each including the two or more candidate texts;

generating a plurality of question-answering procedural texts by concatenating the question text in front of each of the procedural texts;

performing morphological analysis on each of the question-answering procedural texts to identify word classes of a plurality of words included in each of the question-answering procedural texts;

specifying a combination of a plurality of first target terms selected from each of the question-answering procedural texts on a basis of the identified word classes, referring to the combination pointwise-mutual-information model, and specifying a likelihood of the specified combination, to specify a first likelihood, the first likelihood being a likelihood of each of the procedural texts;

generate a plurality of first target procedural texts by deleting the question text from a plurality of question-answering procedural texts extracted by narrowing down the procedural texts with the first likelihoods;

specifying a permutation of a plurality of second target terms selected from each of the first target procedural texts on a basis of the identified word classes, referring to the permutation pointwise-mutual-information model, and specifying a likelihood of the specified permutation, to specify a second likelihood, the second likelihood being a likelihood of each of the first target procedural texts;

extracting a plurality of second target procedural texts by narrowing down the first target procedural texts with the second likelihoods; and

referring to the target trained model to specify a ranking likelihood, the ranking likelihood being a likelihood of each of the second target procedural texts.

## FIG. 1

## FIG. 2

# FIG. 3

```
                    ┌─────────────┐
                    │    START    │
                    └─────────────┘
                           │
                           ▼
          ┌──────────────────────────────────┐
          │      ACQUIRE TRAINING DATA        │ ～S10
          └──────────────────────────────────┘
                           │
                           ▼
          ┌──────────────────────────────────┐
          │       MORPHOLOGICAL ANALYSIS      │ ～S11
          └──────────────────────────────────┘
                           │              S12
                           ▼
   NO  ◄───────┤  TWO OR MORE PREDICATES?  ├
                           │
                         YES
                           ▼
          ┌──────────────────────────────────┐
          │  SPECIFY ONE PERMUTATION OF ONE   │ ～S13
          │   ARGUMENT AND TWO PREDICATES     │
          └──────────────────────────────────┘
                           │
                           ▼
          ┌──────────────────────────────────┐
          │  RECORD PERMUTATION POINTWISE     │ ～S14
          │       MUTUAL INFORMATION          │
          └──────────────────────────────────┘
                           │              S15
                           ▼                    YES
          ┤   ANOTHER PERMUTATION?   ├──────►
                           │
                          NO
                           ▼
                    ┌─────────────┐
                    │     END     │
                    └─────────────┘
```

# FIG. 4

# FIG. 5

```
            ┌──────────────┐
            │    START     │
            └──────┬───────┘
                   ↓
   ┌────────────────────────────────┐
   │   ACQUIRE STEP COUNT DATA       │──∿ S20
   └────────────────┬───────────────┘
                    ↓
   ┌────────────────────────────────┐
   │     CREATE PROCEDURAL TEXT      │──∿ S21
   └────────────────┬───────────────┘
                    ↓
   ┌────────────────────────────────┐
   │     MORPHOLOGICAL ANALYSIS      │──∿ S22
   └────────────────┬───────────────┘
                    ↓
   ┌────────────────────────────────┐
   │     DETERMINE LIKELIHOOD        │──∿ S23
   └────────────────┬───────────────┘
                    ↓
   ┌────────────────────────────────┐
   │    CANDIDATE TEXT RANKING       │──∿ S24
   └────────────────┬───────────────┘
                    ↓
            ┌──────────────┐
            │     END      │
            └──────────────┘
```

# FIG. 6

FIG. 6

INFORMATION PROCESSING DEVICE — 300

FIRST TRAINING DATA → ACQUIRING UNIT (301) → MORPHOLOGICAL-ANALYSIS PERFORMING UNIT (302)

SECOND TRAINING DATA → ACQUIRING UNIT (301)

COMMUNI-CATION UNIT (104)

SPECIFYING UNIT (303)

GENERATING UNIT (305)

FIRST TRAINED MODEL

SECOND TRAINED MODEL

SECOND MODEL STORAGE UNIT (308)

FIRST MODEL STORAGE UNIT (307)

# FIG. 7

```
              ┌─────────────┐
              │    START    │
              └──────┬──────┘
                     │
       ┌─────────────▼──────────────┐
       │  ACQUIRE FIRST TRAINING DATA│ ～S30
       └─────────────┬──────────────┘
                     │
       ┌─────────────▼──────────────┐
       │   MORPHOLOGICAL ANALYSIS    │ ～S31
       └─────────────┬──────────────┘
                     │                    S32
  NO   ┌─────────────▼──────────────┐
◄──────┤   ONE OR MORE PREDICATES?   │
       └─────────────┬──────────────┘
                     │ YES
                     ▼
       ┌────────────────────────────┐
       │ SPECIFY ONE COMBINATION OF ONE │ ～S33
       │  PREDICATE AND TWO ARGUMENTS   │
       └─────────────┬──────────────┘
                     │
       ┌─────────────▼──────────────┐
       │   RECORD COMBINATION POINTWISE │ ～S34
       │      MUTUAL INFORMATION        │
       └─────────────┬──────────────┘
                     │               S35
       ┌─────────────▼──────────────┐ YES
       │     ANOTHER COMBINATION?    ├────►
       └─────────────┬──────────────┘
                     │ NO
              ┌──────▼──────┐
              │     END     │
              └─────────────┘
```

# FIG. 8

# FIG. 9

```
        ┌─────────────┐
        │    START    │
        └─────────────┘
               │
               ▼
┌─────────────────────────────┐
│  ACQUIRE QUESTION TEXT DATA  │   S40
│      AND STEP COUNT DATA     │
└─────────────────────────────┘
               │
               ▼
┌─────────────────────────────┐
│   CREATE QUESTION-ANSWERING  │   S41
│        PROCEDURAL TEXT       │
└─────────────────────────────┘
               │
               ▼
┌─────────────────────────────┐
│     MORPHOLOGICAL ANALYSIS   │   S42
└─────────────────────────────┘
               │
               ▼
┌─────────────────────────────┐
│      DETERMINE LIKELIHOOD    │   S43
└─────────────────────────────┘
               │
               ▼
┌─────────────────────────────┐
│    DETERMINE PROCEDURAL TEXT │   S44
└─────────────────────────────┘
               │
               ▼
┌─────────────────────────────┐
│      DETERMINE LIKELIHOOD    │   S45
└─────────────────────────────┘
               │
               ▼
┌─────────────────────────────┐
│     CANDIDATE TEXT RANKING   │   S46
└─────────────────────────────┘
               │
               ▼
        ┌─────────────┐
        │     END     │
        └─────────────┘
```

## FIG. 10

QUESTION TEXT DATA / STEP COUNT DATA → **401** ACQUIRING UNIT → **403** PROCEDURAL-TEXT GENERATING UNIT ← **502** COMMUNICATION UNIT

**432** CANDIDATE-TEXT STORAGE UNIT, **433** FIRST MODEL STORAGE UNIT, **434** SECOND MODEL STORAGE UNIT, **535** ALTERNATE-MODEL STORAGE UNIT

**500** INFORMATION PROCESSING DEVICE

**404** MORPHOLOGICAL-ANALYSIS PERFORMING UNIT → **505** FIRST INFERENCE UNIT → **507** SECOND INFERENCE UNIT

LIKELIHOOD OUTPUT → **506** RANKING UNIT

EP 4 318 271 A1

# FIG. 11

```
                    ┌─────────┐
                    │  START  │
                    └────┬────┘
                         │
                         ▼
        ┌───────────────────────────────────┐
        │   ACQUIRE QUESTION TEXT DATA       │──S50
        │     AND STEP COUNT DATA            │
        └───────────────┬───────────────────┘
                        │
                        ▼
        ┌───────────────────────────────────┐
        │   CREATE QUESTION-ANSWERING        │──S51
        │       PROCEDURAL TEXT              │
        └───────────────┬───────────────────┘
                        │
                        ▼
        ┌───────────────────────────────────┐
        │     MORPHOLOGICAL ANALYSIS         │──S52
        └───────────────┬───────────────────┘
                        │
                        ▼
        ┌───────────────────────────────────┐
        │      DETERMINE LIKELIHOOD          │──S53
        └───────────────┬───────────────────┘
                        │
                        ▼
        ┌───────────────────────────────────┐
        │    DETERMINE PROCEDURAL TEXT       │──S54
        └───────────────┬───────────────────┘
                        │
                        ▼
        ┌───────────────────────────────────┐
        │      DETERMINE LIKELIHOOD          │──S55
        └───────────────┬───────────────────┘
                        │
                        ▼
        ┌───────────────────────────────────┐
        │        NARROWING DOWN              │──S56
        └───────────────┬───────────────────┘
                        │
                        ▼
        ┌───────────────────────────────────┐
        │      DETERMINE LIKELIHOOD          │──S57
        └───────────────┬───────────────────┘
                        │
                        ▼
        ┌───────────────────────────────────┐
        │     CANDIDATE TEXT RANKING         │──S58
        └───────────────┬───────────────────┘
                        │
                        ▼
                    ┌─────────┐
                    │   END   │
                    └─────────┘
```

## INTERNATIONAL SEARCH REPORT

| | International application No. |
|---|---|
| | PCT/JP2021/015420 |

| A. CLASSIFICATION OF SUBJECT MATTER |
|---|
| G06F 16/90(2019.01)i |
| FI: G06F16/90 100 |

According to International Patent Classification (IPC) or to both national classification and IPC

| B. FIELDS SEARCHED |
|---|

Minimum documentation searched (classification system followed by classification symbols)
G06F16/90

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | 高山 隼矢、 荒瀬 由紀 , Distant Supervision を用いた情報量を制御可能な雑談応答生成 , 言語処理学会第 26 回年次大会発表論文集 [online], 言語処理学会 , 09 March 2020, pp. 323-326, [retrieval date: 01 June 2021], Internet<URL:https://www.anlp.jp/proceedings/annual_meeting/2020/pdf_dir/C1-3.pdf>, 3. suggested technique, (TAKAYAMA, Jun'ya. ARASE, Yuki. The Association for Natural Language Processing.), non-official translation (Chat response generation that can control the amount of information using Distant Supervision. Proceedings of the 26th Annual Meeting of the Association for Natural Language Processing [online].) | 1-31 |
| A | JP 2017-174009 A (NEC CORP) 28 September 2017 (2017-09-28) paragraphs [0053]-[0061], [0081]-[0084] | 1-31 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 May 2021 (25.05.2021) | 22 June 2021 (22.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | INTERNATIONAL SEARCH REPORT | International application No. |
|---|---|---|
| | | PCT/JP2021/015420 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/029348 A1 (COMMUNITY ENGINE INC) 15 March 2007 (2007-03-15) paragraphs [0042]-[0046] | 1-31 |
| A | JP 2020-123132 A (TOSHIBA CORP) 13 August 2020 (2020-08-13) [0032] | 5-21, 23-26, 28-31 |

Form PCT/ISA/210 (continuation of second sheet) (January 2015)

**INTERNATIONAL SEARCH REPORT**
Information on patent family members

International application No.

PCT/JP2021/015420

| Patent Documents referred in the Report | Publication Date | Patent Family | Publication Date |
|---|---|---|---|
| JP 2017-174009 A | 28 Sep. 2017 | (Family: none) | |
| WO 2007/029348 A1 | 15 Mar. 2007 | US 2009/0106396 A1 paragraphs [0055]-[0059] | |
| JP 2020-123132 A | 13 Aug. 2020 | (Family: none) | |

Form PCT/ISA/210 (patent family annex) (January 2015)

**EP 4 318 271 A1**

**Patent documents cited in the description**

- US 10452978 B